(19) Europäisches Patentamt / European Patent Office / Office européen des brevets

(11) **EP 2 432 299 A1**

(12) **EUROPEAN PATENT APPLICATION**

(43) Date of publication:
**21.03.2012 Bulletin 2012/12**

(51) Int Cl.:
**H05B 33/08** (2006.01)    **G05F 1/46** (2006.01)

(21) Application number: **11250681.1**

(22) Date of filing: **28.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.09.2010 US 885893**

(71) Applicant: **Grote Industries, Inc.**
**Madison, IN 47250 (US)**

(72) Inventor: **Brooks, Timothy W.**
**Madison, Indiana 47250 (US)**

(74) Representative: **Stevenson-Hill, Jack Patrick et al**
**Marks & Clerk LLP**
**Sussex House**
**83-95 Mosley Street**
**Manchester  M2 3LG (GB)**

(54) **Temperature compensated LED constant current source**

(57)    A device and method for providing a temperature compensated LED constant current source. A positive temperature coefficient (PTC) resistor (140) is utilized to reduce the current being supplied through a driver circuit to an LED lighting element (105) under varying environmental conditions. The PTC resistor prevents the LED elements from overheating due to excessive ambient temperature, improper thermal design or excessive voltage. A voltage regulator (15) may be included to linearize the temperature vs. resistance characteristics of the PTC resistor.

Fig. 1

**Description**

FIELD OF THE INVENTION

The present invention relates to lighting control systems for LED lighting applications.

BACKGROUND

The use of light emitting diode (LED) based lighting devices has become prevalent in recent years. LED lighting offers a number of advantages, including increased life and high efficiency. However, the LED elements can also be sensitive to extreme voltage or ambient temperature fluctuations.

The LED elements are often powered using a driver circuit, such as a linear constant current source. Such current sources typically use a transistor to dissipate any voltage (and power) beyond that needed to safely drive the LED elements. This allows for voltage fluctuations beyond a reference value while still maintaining a constant light output.

The amount of temperature rise that a constant current biased light source experiences is a function of the ambient temperature around the lamp, the amount of applied voltage, and ability of the package to dissipate excess heat and power. The lighting device supplier can specify the parameters under which an LED lamp should be operated, however the end user may utilize the device under conditions which are outside those specified by the manufacturer. Without proper protection, the temperature of the lighting elements may increase beyond their rated temperature causing uneven light output or even component failure.

One disadvantage to prior art constant current integrated circuit designs is the lack of user controlled thermal pullback with discrete components. Thermal pullback refers to the gradual reduction of current through a circuit over time, thereby preventing excessive heat buildup in the lighting elements. Voltage regulators can be used to control the voltage and/or current applied to the lighting elements. However, most commercially available regulators do not initiate thermal pullback until the ambient temperature has reached about 160 degrees Celsius. At this point, the temperature of the LEDs has typically exceeded the recommended threshold. Other types of regulators will strobe the LEDs on and off or even shut the LEDs off completely in an over temperature situation. Still other designs incorporate discrete temperature sensors which activate a switch when a threshold temperature is reached, thereby causing a drastic decrease in light output. This can be unacceptable from both a safety and user experience standpoint, especially in automotive or other industrial applications.

A solution is needed that will gradually reduce the power to the lighting elements as the temperature increases, preferably slow enough that a user will not notice an abrupt change in light output.

SUMMARY OF THE INVENTION

Accordingly, according to one embodiment, an electrical circuit for driving at least one light emitting diode (LED) is disclosed, comprising: a transistor connected in the current path of the light emitting diode, said transistor comprising a control terminal and at least one load terminal; and a PTC resistor connected between a supply voltage source and the control terminal of the transistor; wherein the at least one load terminal of the transistor is connected in the current path of the light emitting diode; and wherein the PTC resistor restricts the current supplied to the control terminal of the transistor as the temperature of the PTC resistor increases; and wherein the transistor restricts the current in the current path of the light emitting diode as the current supplied to the control terminal of the transistor decreases.

According to another embodiment, an electrical circuit for driving at least one light emitting diode is disclosed, comprising: a transistor connected in the current path of the light emitting diode, said transistor comprising a control terminal and at least one load terminal; a PTC resistor connected between a supply voltage source and the control terminal of the transistor; and a regulator connected to the control terminal of the transistor; and a load resistor connected in the current path of the light emitting diode and the at least one transistor load terminal; wherein the at least one load terminal of the transistor is connected in the current path of the light emitting diode; wherein the PTC resistor restricts the current supplied to the control terminal of the transistor as the temperature of the PTC resistor increases; wherein the transistor restricts the current in the current path of the light emitting diode as the current supplied to the control terminal of the transistor decreases; wherein a reference terminal of the regulator is further connected across the load resistor; and wherein the regulator is configured to compensate for the non-linear characteristics of the PTC resistor by increasing or decreasing the current supplied to the control terminal of the transistor below a specified temperature.

According to another embodiment, a method for driving at least one light emitting diode is disclosed, comprising the steps of: varying the current being supplied to a control terminal of a transistor in the current path of the light emitting diode; wherein the current is varied due to the varying resistance of a PTC resistor connected between a voltage source and the control terminal.

BRIEF DESCRIPTION OF THE DRAWINGS

Fig. 1 is a schematic diagram depicting a temperature compensated LED constant current source circuit according to one embodiment of the present disclosure.

Fig. 2 is a graph showing the non-linear temperature vs. resistance characteristics of a typical PTC resistor.

Fig. 3 is a schematic diagram depicting a temperature compensated LED constant current source circuit according to another embodiment of the present disclosure

Fig. 4 is a schematic diagram depicting a temperature compensated LED constant current source circuit according to yet another embodiment of the present disclosure

DETAILED DESCRIPTION

For the purposes of promoting and understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates. The present invention can be implemented with various mixtures of analog and digital circuitry.

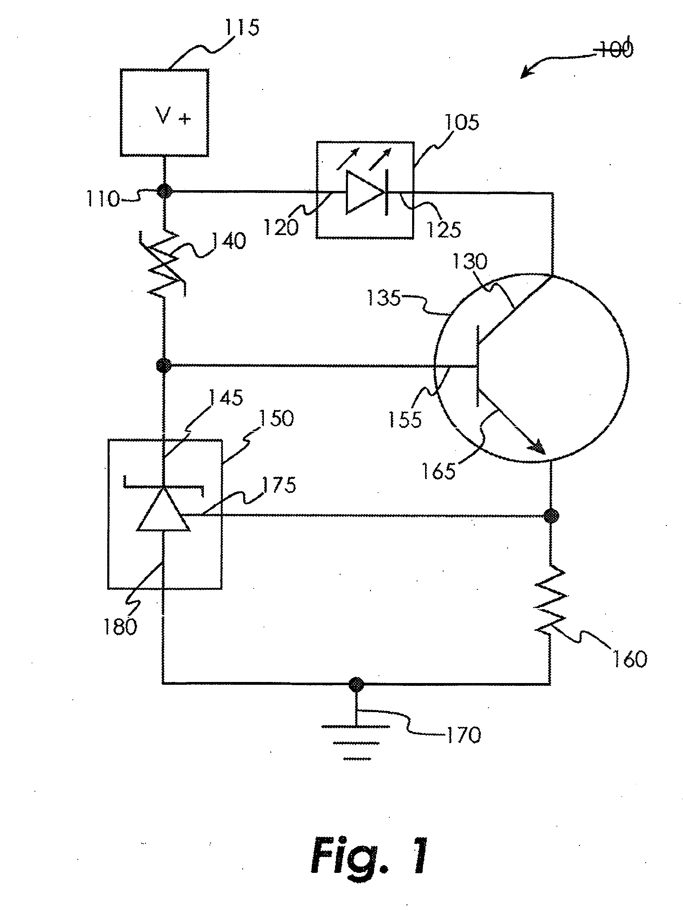

FIG. 1 illustrates a schematic diagram of a circuit 100 for driving an LED 105 from external voltage supply 115. As shown, circuit 100 comprises an LED 105, transistor 135, PTC resistor 140, and resistor 160. Regulator 150 may be optionally included as described hereinbelow.

LED 105 may comprise any type of LED known in the art for use in lighting applications. It shall be understood that while a single LED element is depicted, LED 105 may comprise additional LED elements connected in series or in parallel as required by the particular application.

Referring to Fig. 1, positive terminal 110 of voltage supply 115 is connected to the anode 120 of LED 105. The cathode 125 of LED 105 is connected to the collector 130 of the transistor 135, shown here as an NPN bipolar junction transistor. A positive temperature coefficient (PTC) resistor 140 is connected between the positive terminal 110 of the voltage supply 115 and the cathode 145 of regulator 150 as shown. The base 155 of the transistor 135 is connected to the PTC resistor 140 and the cathode 145 of the regulator 150. Resistor 160 is connected between the emitter 165 of transistor 135 and ground 170. The reference terminal 175 of regulator 150 is connected to the emitter 165 of the transistor 135 and resistor 160 as shown. The anode 180 of regulator 150 is connected to ground 170.

Transistor 135 is illustrated here as an NPN bipolar junction transistor, although it shall be understood that other types of linear control components may be used including, but not limited to, PNP bipolar transistors, insulated gate bipolar transistors (IGBT), junction gate field-effect transistors (JFET), and metal-oxide-semiconductor field-effect transistors (MOSFET), or any other device or circuit (discrete or integrated) that allows for linear control of the current through the LED.

In a preferred embodiment, PTC resistor 140 comprises any resistor having a positive temperature coefficient, thereby increasing its resistance as a function of increasing temperature. Resistor 160 is a standard resistor, with a value selected according to the needs of the particular application. In certain embodiments, resistor 160 may be replaced by an LED whose resistance is selected to match the resistance required to produce the desired current through the transistor 135 and LED 105. In other embodiments, the LED 105 may be omitted when the resistor 160 is impiemented as an LED. In still further embodiments, the current through the LED 105 may be controlled from a separate circuit.

Regulator 150 may comprise a voltage regulation device, such as a shunt regulator based on a zener diode, although other types of active or passive voltage regulation devices may be used and are considered to be within the scope of the present disclosure. One example of an acceptable regulator is the LM431 Shunt Zener Regulator supplied by National Semiconductor, 2900 Semiconductor Drive, Santa Clara, CA 95051.

In operation, current is initially drawn from the voltage source 115, through PTC resistor 140, and into the control terminal of the transistor 135 (illustrated here as base 155). The amount of current entering the base 155 is initially determined by the resistance value of the PTC resistor 140. Transistor 135 then allows current to flow from the voltage source 115, through the LED 105, through the load terminals (collector 130 and emitter 165) of the transistor 135, and through the resistor 160 to ground 170.

When PTC resistor 140 heats up, it resistance will increase, thereby decreasing the current flowing into the base 155. It is a known characteristic of an NPN transistor, if manufactured as a bipolar transistor, that current flowing out of the emitter ($I_e$) is approximately equal to the current flowing into the collector ($I_c$) plus the current flowing into the base $(I_b)$, as defined by equation (1) below.

$$I_e = I_c + I_b \qquad (1)$$

Furthermore, the collector current ($I_c$) is proportional to the base current ($I_b$) based on a gain value β as defined by equation (2) below.

$$I_c = \beta I_b \qquad (2)$$

The value of $\beta$ may vary based on the characteristics of the particular transistor being used, but is typically in the range of 10 to 100. Therefore, equations (1) and (2) may be combined to arrive at equation (3) below.

$$I_e = I_c + (I_c/\beta) \qquad (3)$$

Because the value of $\beta$ is high, the value of $I_e$ will roughly approximate the value of $I_c$. Therefore, as the base current is restricted due to the increasing resistance of PTC resistor 140, the collector and emitter current values will also decrease.

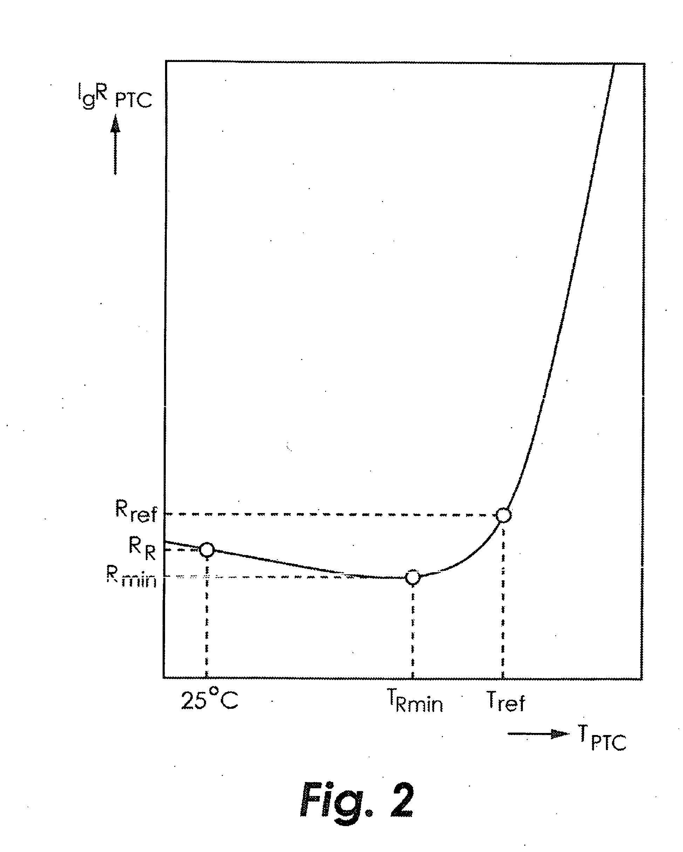

One drawback to using the PTC resistor 140 as the sole thermal control and current limiting device is the non-linear relationship between the resistance and temperature of a PTC resistor, particularly in the lower temperature range. Fig. 2 shows a resistance vs. temperature curve of a typical PTC resistor. Note also that the graph of Fig. 2 is displayed with a logarithmic vertical scale due to the large resistance changes which occur in the PTC resistor as a result of corresponding temperature changes. As can be seen from the graph, the PTC resistor only exhibits the rated positive temperature coefficient above a specified temperature (shown here as $T_{Rmin}$). Below $T_{Rmin}$, the PTC resistor will actually exhibit a negative temperature coefficient, which would cause the unintended effect of decreasing the light output of LED 105 with decreasing temperature. This is particularly problematic in applications where a constant light output must be maintained despite large fluctuations in operating temperatures.

To overcome the non-linear characteristics of the PTC resistor 140 in the lower temperature range, regulator 150 is used in combination with PTC resistor 140. The voltage drop across the resistor 160 (and thereby the current flowing through the resistor 160) is sensed by regulator 150 via reference terminal 175. Regulator 150 uses this voltage as the feedback for controlling the current being allowed to reach base 155.

In a preferred embodiment, the regulator 150 has a factory-set reference voltage that the regulator 150 will attempt to maintain across the resistor 160, with resistor 160 being sized to result in the desired current through the LED 105. The regulator 150 achieves this regulation by increasing or decreasing the current allowed into the cathode 145 and out the anode 180 as needed in order to maintain the specified reference voltage across the resistor 160. As long as the resistance of PTC resistor 140 does not increase to the point that the transistor 135 cannot drive the proper collector current, the regulator 150 will keep the current through the resistor 160 (and similarly, the current through the LED 105) constant in the temperature range below $T_{ref}$. This in turn has the effect of maintaining a constant light output until the temperature increases beyond $T_{ref}$. The design characteristics of the transistor 135 and the PTC resistor 140 must be selected such that the base current to the transistor 135 is sufficiently supplied as long as the resistance of the PTC resistor 140 is below $R_{ref}$ as shown in Fig. 2.

When the operating temperature surpasses $T_{ref}$ (thereby causing the resistance of the PTC resistor 140 to surpasses $R_{ref}$), the regulator 150 will no longer shunt additional excess current to ground 170. This will allow the current through the LED 105 to gradually be reduced until a thermal equilibrium is met. The decrease in light output will be gradual due to the characteristics of the PTC resistor 140. Because the human eye does not respond to gradual changes in light when compared to drastic changes, the user may not notice the decrease as the current settles to the equilibrium. The equilibrium point will be a function of the ambient temperature, the operating voltage and the component package design.

In order to increase the response of the circuit 100 to changes in the temperature of LED 105, the PTC resistor 140 may optionally be thermally coupled to LED 105. In one embodiment, the thermal coupling may be accomplished by placing the PTC resistor 140 and LED 105 sufficiently close to one another and/or within a common casing, causing the temperature of the PTC resistor to approximately equal the operating temperature of LED 105. In other embodiments, PTC 140 is thermally connected to LED 105 using a metallic conductor or other suitable thermally-conductive medium known in the art.

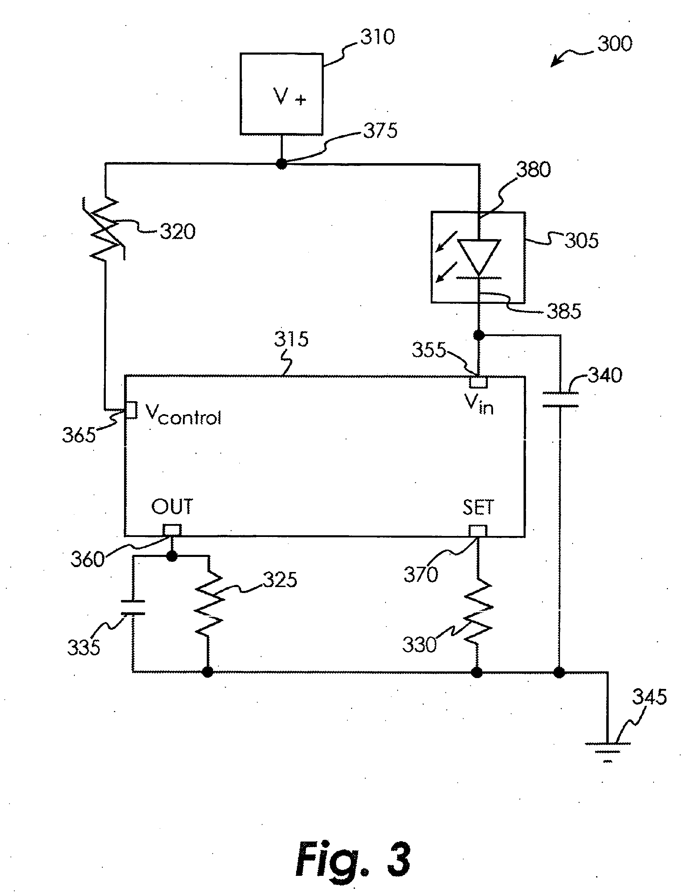

FIG. 3 illustrates a schematic diagram of a circuit 300 for driving an LED 305 from external voltage supply 310 according to another embodiment. As shown, circuit 300 comprises an LED 305, regulator 315, PTC resistor 320, resistors 325 and 330, and capacitors 335 and 340.

Regulator 315 is similar to a model LT3080 integrated linear regulator supplied by Linear Technology, 1630 McCarthy Blvd., Milpitas, CA 95035-7417. As shown, integrated regulator 315 includes input terminal 355, output terminal 360, control terminal 365, and set terminal 370 The regulator 315 comprises an integrated transistor and differential amplifier circuit, the details of which are omitted for simplicity.

Referring to Fig. 3, positive terminal 375 of voltage supply 310 is connected to the anode 380 of LED 305. The cathode 385 of LED 305 is connected the input terminal 355 of regulator 315. A PTC resistor 320 is connected between the positive terminal 375 of voltage supply 310 and the control terminal 365 of the regulator 315 as shown.

Resistor 325 is connected between the output terminal 360 of regulator 315 and ground 345. The value of resistor 325 is selected to provide the desired amount of current through the LED 380 for a given current being received at the control terminal 365. Resistor 330 is connected between the set terminal 370 of regulator 315 and ground 345. The value of the resistor 330 is selected in order to provide the proper output voltage across resistor 325 according to the needs of the particular application.

Capacitor 335 is optionally connected between output terminal 360 of regulator 315 and ground 345 to provide filtering and prevent unwanted oscillations in output. Likewise, capacitor 340 is optionally connected between the input terminal 355 of regulator 315 and ground 345.

In operation, the current directed to the control terminal 365 biases an internal transistor (not shown) of the regulator 315. As the temperature increases, the resistance of the PTC resistor 320 also increases, allowing less current to reach the control terminal 365 of the regulator 315. The regulator 315 accordingly reduces the current being directed through the LED 305 and resistor 325, while maintaining the desired linear response as discussed hereinabove.

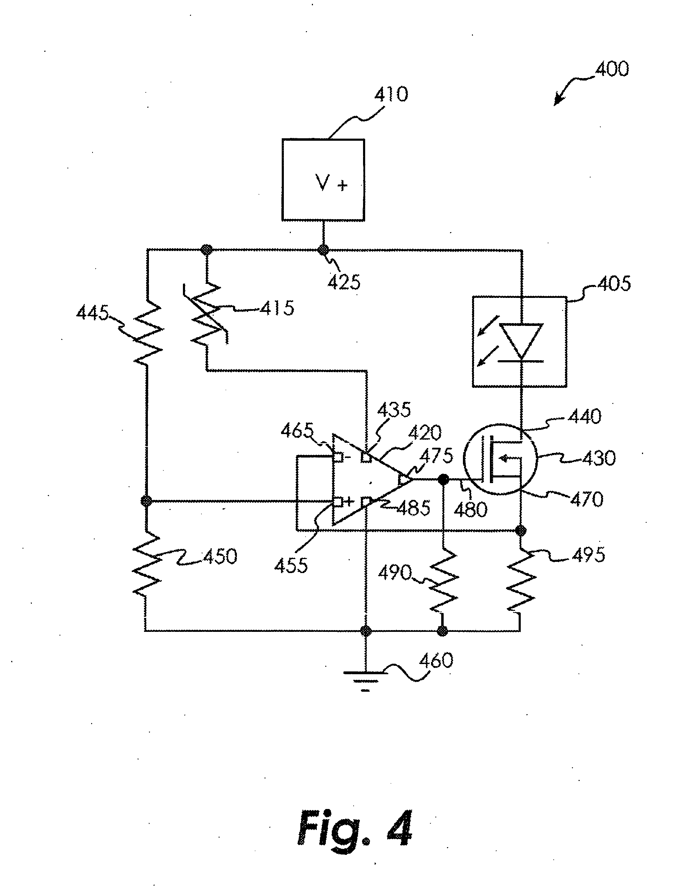

FIG. 4 illustrates a schematic diagram of a circuit 400 for driving an LED 405 from external voltage supply 410 using a current source arrangement according to a current source arrangement according to another embodiment. As shown, circuit 400 comprises an LED 405, PTC resistor 415, operational amplifier 420, and transistor 430 (shown here as a metal oxide semiconductor field effect transistor, or MOSFET, although other transistor configurations may be used). PTC resistor 415 is connected between the positive terminal 425 of voltage supply 410 and the positive supply terminal 435 of the operational amplifier 420 as shown. The LED 405 is connected between the positive terminal 425 of the voltage supply 410 and the drain terminal 440 of the transistor 430.

Resistor 445 is connected between the positive supply terminal 425 of voltage supply 410 and the non-inverting input terminal 455 of operational amplifier 420. Resistor 450 is connected between the non-inverting input terminal 455 of operational amplifier 420 and ground 460. The inverting input 465 of differential amplifier 420 is connected to the source terminal 470 of transistor 430 in a feedback configuration. The output terminal 475 of operational amplifier 420 is connected to the gate terminal 480 of operational amplifier 430. The negative source terminal 485 of operational amplifier 420 is connected to ground 460. Resistor 490 is connected between the output terminal 475 of operational amplifier 420 and ground 460. Resistor 495 is connected between the source terminal 470 of transistor 430 and ground 460.

The non-inverting input terminal 455 of operational amplifier 420 senses a reference voltage across the resistor 450, while the non-inverting input works as a feedback input to sense the voltage across the resistor 495. The operational amplifier 420 uses the voltage differential between terminal 455 and terminal 465 to determine the gain required to maintain a linear response at the output terminal 475. As the temperature increases, however, the PTC resistor 415 will increase in resistance, thereby limiting the supply voltage available to the operational amplifier 420. This further reduces the current being directed to the gate 480 of transistor 430 and reduces the current through the LED 405. Eventually, as the temperature decreases due to the reduced current through the LED 405, a thermal equilibrium will be reached.

While the invention has been illustrated and described in detail in the drawings and foregoing description, the same is to be considered as illustrative and not restrictive in character, it being understood that only certain embodiments have been shown and described and that all equivalents, changes, and modifications that come within the spirit of the inventions as described herein and/or by the following claims are desired to be protected.

Hence, the proper scope of the present invention should be determined only by the broadest interpretation of the appended claims so as to encompass all such modifications as well as all relationships equivalent to those illustrated in the drawings and described in the specification.

The present invention has the following aspects:

1. An electrical circuit for driving at least one light emitting diode, comprising:

a transistor connected in the current path of the light emitting diode, said transistor comprising a control terminal and at least one load terminal; and
a PTC resistor connected between a supply voltage source and the control terminal of the transistor;
wherein the at least one load terminal of the transistor is connected in the current path of the light emitting diode; and
wherein the PTC resistor restricts the current supplied to the control terminal of the transistor as the temperature of the PTC resistor increases; and
wherein the transistor restricts the current in the current path of the light emitting diode as the current supplied to the control terminal of the transistor decreases.

2. The circuit of aspect 1, wherein the PTC resistor is thermally connected to the light emitting diode.

3. The circuit of aspect 1, wherein the transistor is a bipolar junction transistor and the at least one load terminal comprises a collector and an emitter of the bipolar junction transistor.

4. The circuit of aspect 1, wherein the transistor is a field effect transistor and the at least one load terminal comprises a drain and a source of the field effect transistor.

5. The circuit of aspect 1, further comprising:

a regulator connected to the control terminal of the transistor; and

a load resistor connected in the current path of the light emitting diode and the at least one transistor load terminal;

wherein a reference terminal of the regulator is further connected across the load resistor; and wherein the regulator is configured to compensate for the non-linear characteristics of the PTC resistor by increasing or decreasing the current supplied to the control terminal of the transistor.

6. The circuit of aspect 5, wherein the load resistor is the light emitting diode.

7. The circuit of aspect 5, wherein the load resistor is separate from the light emitting diode.

8. The circuit of aspect 5, wherein the regulator is configured to shunt excess current to ground when the voltage across the load resistor exceeds a predetermined value.

9. The circuit of aspect 8, wherein the regulator comprises a shunt regulator.

10. The circuit of aspect 5, wherein the regulator and load resistor are configured to maintain a desired current through the light emitting diode up to a predetermined temperature.

11. The circuit of aspect 10, wherein the PTC resistor, regulator, and load resistor are configured to reduce the current through the light emitting diode above the predetermined temperature.

12. An electrical circuit for driving at least one light emitting diode, comprising:

a transistor connected in the current path of the light emitting diode, said transistor comprising a control terminal and at least one load terminal; a PTC resistor connected between a supply voltage source and the control terminal of the transistor; and a regulator connected to the control terminal of the transistor; and a load resistor connected in the current path of the light emitting diode and the at least one transistor load terminal; wherein the at least one load terminal of the transistor is connected in the current path of the light emitting diode; wherein the PTC resistor restricts the current supplied to the control terminal of the transistor as the temperature of the PTC resistor increases; wherein the transistor restricts the current in the current path of the light emitting diode as the current supplied to the control terminal of the transistor decreases; wherein a reference terminal of the regulator is further connected across the load resistor; and wherein the regulator is configured to compensate for the non-linear characteristics of the PTC resistor by increasing or decreasing the current supplied to the control terminal of the transistor below a specified temperature.

13. The circuit of aspect 12, wherein the transistor is a bipolar junction transistor and the at least one load terminal comprises a collector and an emitter of the bipolar junction transistor.

14. The circuit of aspect 12, wherein the transistor is a field effect transistor and the at least one load terminal comprises a drain and a source of the field effect transistor.

15. The circuit of aspect 12, wherein the regulator comprises an operational amplifier, said operational amplifier having a reference voltage input and a feedback input.

16. A method for driving at least one light emitting diode, comprising the steps of:

varying the current being supplied to a control terminal of a transistor in the current path of the light emitting diode; wherein the current is varied due to the varying resistance of a PTC resistor connected between a voltage source and the control terminal.

17. The method of aspect 16, further comprising the step of thermally coupling the PTC resistor to the light emitting diode.

18. The method of aspect 16, wherein the transistor is a bipolar junction transistor and the control terminal is the base of the bipolar junction transistor.

19. The method of aspect 17, wherein the transistor is a field effect transistor and the control terminal is the gate of the field effect transistor.

20. The method of aspect 17, further comprising the step of maintaining the current being supplied to the control terminal at a substantially constant level up to a predetermined temperature using a regulator.

21. The method of aspect 15, further comprising the step of decreasing the current being supplied to the control terminal based on the increasing resistance of the PTC resistor once the temperature exceeds the predetermined temperature.

22. The method of aspect 16, wherein the regulator and the transistor are integrated into a single circuit.

23. The method of aspect 16, wherein a regulator controls the current being supplied to the control terminal of the transistor; and wherein the transistor in turn controls the current being supplied to the light emitting diode.

24. The method of aspect 16, wherein a regulator is connected between the PTC resistor and the control terminal of the transistor; and wherein the PTC resistor varies the current being supplied to a control pin of the regulator.

25. An electrical circuit for driving at least one light emitting diode, comprising:

a linear control component connected in the current path of the light emitting diode, said linear control component comprising a control terminal and at least one load terminal; and
a temperature dependent resistor connected to the control terminal of the linear control component;
wherein the at least one load terminal of the linear control component is connected in the current path of the light emitting diode; and
wherein the temperature dependent resistor restricts a signal supplied to the control terminal of the linear control component as the temperature of the temperature dependent resistor increases; and
wherein the linear control component restricts the current in the current path of the light emitting diode as the signal supplied to the control terminal of the linear control component decreases.

26. The electrical circuit of aspect 25, wherein the linear control component comprises a transistor.

27. The electrical circuit of aspect 25, wherein the temperature dependent resistor comprises a PTC resistor.

28. The electrical circuit of aspect 25, wherein the signal comprises a control current.

**Claims**

1. An electrical circuit for driving at least one light emitting diode, comprising:

a linear control component connected in the current path of the light emitting diode, said linear control component comprising a control terminal and at least one load terminal; and
a temperature dependent resistor connected to the control terminal of the linear control component;
wherein the at least one load terminal of the linear control component is connected in the current path of the light emitting diode; and
wherein the temperature dependent resistor restricts a signal supplied to the control terminal of the linear control component as the temperature of the temperature dependent resistor increases; and
wherein the linear control component restricts the current in the current path of the light emitting diode as the signal supplied to the control terminal of the linear control component decreases.

2. The electrical circuit of claim 1,
wherein the linear control component comprises a transistor; or
wherein the temperature dependent resistor comprises a PTC resistor; or
wherein the signal comprises a control current.

3. The electrical circuit of claim 1, wherein the linear control component is a transistor, the temperature dependent resistor is a PTC resistor, the signal is a current; and wherein the PTC resistor is connected between a supply voltage source and the control terminal of the transistor.

4. The circuit of claim 3,
wherein the PTC resistor is thermally connected to the light emitting diode; or
wherein the transistor is a bipolar junction transistor and the at least one load terminal comprises a collector and an emitter of the bipolar junction transistor; or
wherein the transistor is a field effect transistor and the at least one load terminal comprises a drain and a source of the field effect transistor.

5. The circuit of claim 3, further comprising:

a regulator connected to the control terminal of the transistor; and
a load resistor connected in the current path of the light emitting diode and the at least one transistor load terminal;
wherein a reference terminal of the regulator is further connected across the load resistor; and
wherein the regulator is configured to compensate for the non-linear characteristics of the PTC resistor by increasing or decreasing the current supplied to the control terminal of the transistor.

6. The circuit of claim 3,
wherein the load resistor is the light emitting diode; or

wherein the load resistor is separate from the light emitting diode; or

wherein the regulator is configured to shunt excess current to ground when the voltage across the load resistor exceeds a predetermined value and, optionally, wherein the regulator comprises a shunt regulator; or

wherein the regulator and load resistor are configured to maintain a desired current through the light emitting diode up to a predetermined temperature and, optionally, wherein the PTC resistor, regulator, and load resistor are configured to reduce the current through the light emitting diode above the predetermined temperature.

7.  The circuit of claim 3, wherein the regulator is configured to compensate for the non-linear characteristics of the PTC resistor by increasing or decreasing the current supplied to the control terminal of the transistor below a specified temperature.

8.  The circuit of claim 7,
    wherein the transistor is a bipolar junction transistor and the at least one load terminal comprises a collector and an emitter of the bipolar junction transistor; or
    wherein the transistor is a field effect transistor and the at least one load terminal comprises a drain and a source of the field effect transistor; or
    wherein the regulator comprises an operational amplifier, said operational amplifier having a reference voltage input and a feedback input.

9.  A method for driving at least one light emitting diode, comprising the steps of:

    varying the current being supplied to a control terminal of a transistor in the current path of the light emitting diode;
    wherein the current is varied due to the varying resistance of a PTC resistor connected between a voltage source and the control terminal.

10. The method of claim 9,
    wherein the transistor is a bipolar junction transistor and the control terminal is the base of the bipolar junction transistor; or
    further comprising the step of decreasing the current being supplied to the control terminal based on the increasing resistance of the PTC resistor once the temperature exceeds the predetermined temperature; or
    wherein the regulator and the transistor are integrated into a single circuit; or
    wherein a regulator controls the current being supplied to the control terminal of the transistor; and wherein the transistor in turn controls the current being supplied to the light emitting diode; or

wherein a regulator is connected between the PTC resistor and the control terminal of the transistor; and wherein the PTC resistor varies the current being supplied to a control pin of the regulator.

11. The method of claim 9, further comprising the step of thermally coupling the PTC resistor to the light emitting diode and, optionally,
    wherein the transistor is a field effect transistor and the control terminal is the gate of the field effect transistor; or
    further comprising the step of maintaining the current being supplied to the control terminal at a substantially constant level up to a predetermined temperature using a regulator.

**Fig. 1**

Fig. 2

Fig. 3

**Fig. 4**

Europäisches
Patentamt

European
Patent Office

Office européen
des brevets

**EUROPEAN SEARCH REPORT**

Application Number

EP 11 25 0681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/085503 A1 (NARITA TAKUMI [JP] ET AL) 2 April 2009 (2009-04-02) * the whole document * | 1-11 | INV. H05B33/08 G05F1/46 |
| X | US 2010/033113 A1 (MARUYAMA YASUHIRO [JP] ET AL) 11 February 2010 (2010-02-11) * the whole document * | 1-11 | |
| A | "LM431 Adjustable Precision Zener Shunt Regulator", National Semiconductor - Datasheet, 31 December 1996 (1996-12-31), pages 1-10, XP002667627, Retrieved from the Internet: URL:http://www.datasheetcatalog.org/datasheet/nationalsemiconductor/DS010055.PDF [retrieved on 2012-01-18] * page 8 - page 8 * | 1-11 | |
| A | "LT3080 Adjustable 1.1A Single Resistor Low Dropout Regulator", Linear Technology - Datasheet, 30 June 2010 (2010-06-30), pages 1-26, XP002667628, Retrieved from the Internet: URL:http://www.alldatasheet.com/datasheet-pdf/pdf/349922/LINER/LT3080.html [retrieved on 2012-01-18] * page 16 - page 16 * | 1-11 | TECHNICAL FIELDS SEARCHED (IPC) H05B G05F |

The present search report has been drawn up for all claims

| Place of search | Date of completion of the search | Examiner |
|---|---|---|
| Munich | 20 January 2012 | Burchielli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.** EP 11 25 0681

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2012

| Patent document cited in search report | | Publication date | Patent family member(s) | | Publication date |
|---|---|---|---|---|---|
| US 2009085503 | A1 | 02-04-2009 | JP 2009083590 A<br>US 2009085503 A1 | | 23-04-2009<br>02-04-2009 |
| US 2010033113 | A1 | 11-02-2010 | JP 4649504 B2<br>JP 2010062349 A<br>US 2010033113 A1 | | 09-03-2011<br>18-03-2010<br>11-02-2010 |